# EUROPEAN PATENT APPLICATION

(11) **EP 4 231 372 A1**
(43) Date of publication of application: **23.08.2023**
(21) Application number: 23155292.8
(22) Date of filing: 07.02.2023
(51) Int. Cl.: H01M 4/04, H01M 10/04, F27B 17/00, F27D 7/02, F27D 7/04, F27D 19/00

(54) **HEATING APPARATUS AND MANUFACTURING METHOD OF ELECTRODE GROUP**

(30) Priority: 22.02.2022 JP 2022025828
(71) Applicant: KABUSHIKI KAISHA TOSHIBA, Minato-ku Tokyo 105-0023 (JP)
(72) Inventor: Naka, Tomomichi, Tokyo, 105-0023 (JP)
(74) Representative: Hoffmann Eitle

(57) **Abstract**

In an embodiment, a heating apparatus (1) for heating an electrode group structure (50) includes a chamber (3), a heat conduction plate (20), a temperature adjustment unit (17), a pressure adjustment unit (11,12,13,15), and a controller (24). In a state where the heat conduction plate (20) is in contact with the current collectors (53A,53B) of a plurality of the electrode group structures (50) in a heating room (5) inside chamber (3), the heat conduction plate (20) enables heat to be conducted to the current collectors (53A,53B) of the electrode group structures (50). The controller controls (24) operation of the temperature adjustment unit (17) and the pressure adjustment unit (11,12,13,15) in a state where the heat conduction plate (20) is in contact with the current collectors (53A,53B) of the electrode group structures (50) .

## Description

### FIELD

Embodiments described herein relate generally to a heating apparatus and a manufacturing method of an electrode group.

### BACKGROUND

In manufacturing an electrode group used for a battery or the like, an electrode group structure including a positive electrode and a negative electrode is compressed by pressing, or the like, in a state where the electrode group structure has been preheated. In the process for manufacturing the electrode group as described above, from the viewpoint of stably compressing the electrode group structure, there is a need to appropriately suppress post-heating temperature variations between a plurality of electrode group structures and to shorten the heating time of the electrode group structures in the heating that is performed before the electrode group structures are compressed. That is, there is a need to enable stable heating of the electrode group structures.

### BRIEF DESCRIPTION OF THE DRAWINGS

FIG. 1 is a schematic view showing an example of a process for manufacturing an electrode group according to an embodiment.
FIG. 2 is a perspective view schematically showing an example of an electrode group structure that is to be heated by a heating apparatus according to the embodiment.
FIG. 3 is a schematic view showing an example of a heating apparatus according to the embodiment.
FIG. 4 is a schematic view showing an example of a configuration for adjusting the positions of a plurality of electrode group structures in a heating room of the heating apparatus according to the embodiment.
FIG. 5 is a flowchart schematically showing an example of processing performed by a controller of the heating apparatus according to the embodiment.

### DETAILED DESCRIPTION

A problem to be solved by embodiments is to provide a heating apparatus and a manufacturing method of an electrode group capable of stably heating electrode group structures.

According to an embodiment, a heating apparatus for heating an electrode group structure that includes a current collector is provided. The heating apparatus includes a chamber, a heat conduction plate, a temperature adjustment unit, a pressure adjustment unit, and a controller. A heating room in which a plurality of electrode group structures are arranged is formed inside the chamber, and the heat conduction plate is capable of coming into contact with the current collectors of the plurality of electrode group structures in the heating room. In a state where the heat conduction plate is in contact with the current collectors of the plurality of electrode group structures, the heat conduction plate enables heat to be conducted to the current collectors of the plurality of electrode group structures. The temperature adjustment unit adjusts the temperature of the heating room, and the pressure adjustment unit adjusts the pressure of the heating room. The controller controls operation of the temperature adjustment unit and the pressure adjustment unit in a state where the heat conduction plate is in contact with the current collectors of the plurality of electrode group structures.

An embodiment will be described hereinbelow with reference to the drawings.

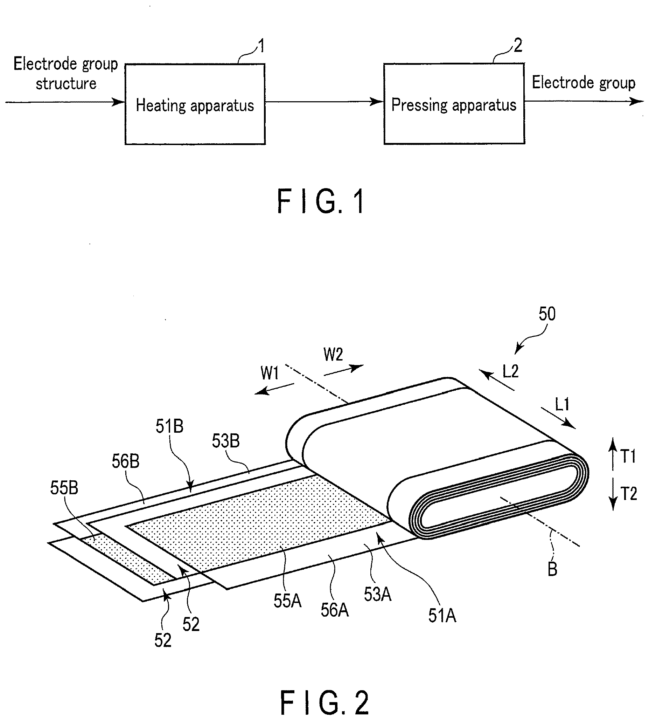

In the embodiment, a heating apparatus used in a process for manufacturing an electrode group is provided. The electrode group manufactured using the heating apparatus according to the embodiment is used for a battery such as a secondary battery, for example. FIG. 1 shows an example of a process for manufacturing an electrode group. In the example of FIG. 1, an electrode group structure including a positive electrode and a negative electrode is heated by a heating apparatus 1. Further, the electrode group structure heated by the heating apparatus 1 is compressed through pressing by a pressing apparatus 2. Thus, an electrode group is formed. As described above, in the process for manufacturing the electrode group, the electrode group structure is preheated by the heating apparatus 1 before being compressed by the pressing apparatus 2. That is, in the heating apparatus 1, preheating of the electrode group structure before compression is performed. Further, the electrode group structure is to be heated by the heating apparatus 1 and to be compressed by the pressing apparatus 2.

FIG. 2 shows an example of an electrode group structure 50 to be heated (preheated) by the heating apparatus 1. In the example of FIG. 2, a positive electrode 51A, a negative electrode 51B, and a separator 52 are wound in a state of being overlapped with each other, and thus an electrode group structure 50 having a winding structure is formed. In the electrode group structure 50, the positive electrode 51A and the negative electrode 51B are electrically insulated from each other by the separator 52.

Furthermore, in the electrode group structure 50, a length direction (the direction indicated by arrow L1 and arrow L2), a width direction (the direction indicated by arrow W1 and arrow W2) intersecting (orthogonal or substantially orthogonal to) the length direction, and a thickness direction (the direction indicated by arrow T1 and arrow T2) intersecting (orthogonal or substantially orthogonal to) both the length direction and the width direction are defined. In the electrode group structure 50, the dimension along the thickness direction is smaller than the dimension along the length direction and the dimension along the width direction. Furthermore, in the electrode group structure 50, the winding axis B of the winding structure is along the length direction. In addition, when the electrode group structure 50 is compressed by the pressing apparatus 2 or the like, the electrode group structure 50 is compressed as a result of the electrode group structure 50 being pressed from one side or from both sides in the thickness direction.

In the electrode group structure 50 of the example in FIG. 2, the positive electrode 51A includes a current collector (a positive electrode current collector) 53A and an active material-containing layer (a positive electrode active material-containing layer) 55A that is supported on the surface of the current collector 53A. Further, the negative electrode 51B includes a current collector (a negative electrode current collector) 53B and an active material-containing layer (a negative electrode active material-containing layer) 55B that is supported on the surface of the current collector 53B. In one example, the current collectors 53A and 53B are each formed of aluminum or an aluminum alloy. In the current collector 53A, a current collecting tab (a positive electrode current collecting tab) 56A is formed as an unsupported portion not supporting the active material-containing layer 55A, and in the current collector 53B, a current collecting tab (a negative electrode current collecting tab) 56B is formed as an unsupported portion not supporting the active material-containing layer 55B.

In the electrode group structure 50 of the example in FIG. 2, the current collecting tab 56A of the positive electrode 51A protrudes to one side in the length direction with respect to the negative electrode 51B and the separator 52. Further, the current collecting tab 56B of the negative electrode 51B protrudes with respect to the positive electrode 51A and the separator 52 to the side opposite to the side where the current collecting tab 56B protrudes in the length direction. Note that, in an example of the electrode group structure, the current collecting tab of the negative electrode protrudes toward the side where the current collecting tab of the positive electrode protrudes in the length direction. In this case, the current collecting tab of the positive electrode and the current collecting tab of the negative electrode are formed apart from each other in the width direction of the electrode group structure.

Furthermore, in another example, instead of being formed in a winding structure, the electrode group structure is formed in a stacked structure in which a plurality of positive electrodes and a plurality of negative electrodes are alternately stacked. Also in the case of an electrode group structure having a stacked structure, as per the case of a winding structure, the length direction, the width direction, and the thickness direction are defined, and the dimension along the thickness direction is smaller than the dimension along the length direction and the dimension along the width direction. Further, in the electrode group structure having a stacked structure, the stacking direction of the positive electrode and the negative electrode coincides with or substantially coincides with the thickness direction. Further, a separator is interposed between the positive electrode and the negative electrode, and the positive electrode and the negative electrode are electrically insulated by the separator.

Also in an electrode group structure having a stacked structure, each of the positive electrode and the negative electrode includes a current collector and an active material-containing layer, and a current collecting tab is formed on each of the positive electrode and the negative electrode as an unsupported portion not supporting the active material-containing layer in the current collector. Further, in an electrode group structure, as per the case of an electrode group structure having a winding structure, the current collecting tab of the positive electrode protrudes to one side in the length direction, and the current collecting tab of the negative electrode protrudes to the side where the positive-electrode current collecting tab protrudes in the length direction or to the side opposite to the side where the positive-electrode current collecting tab protrudes in the length direction.

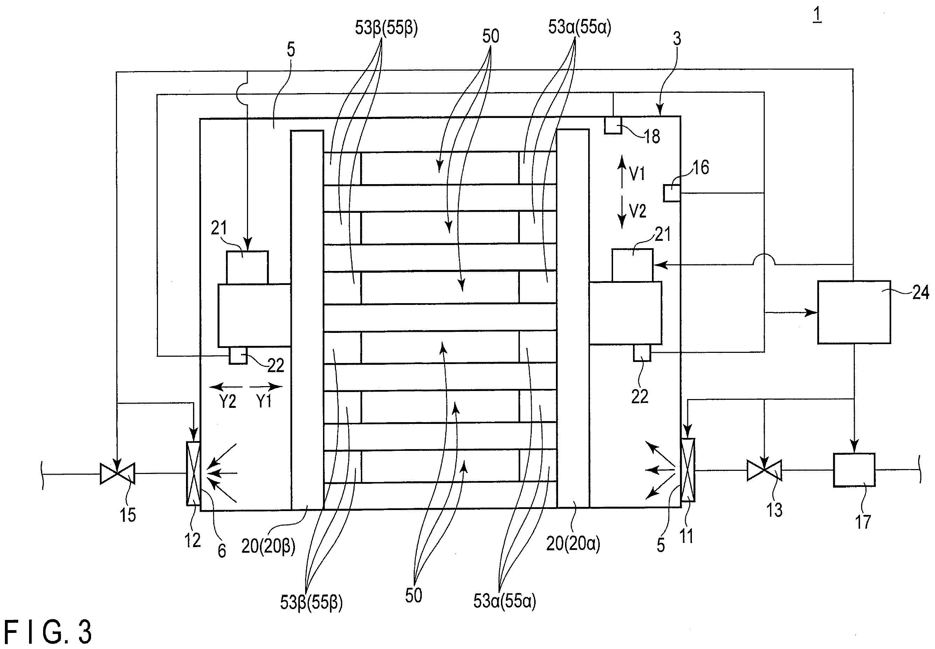

FIG. 3 shows an example of the heating apparatus 1 according to the embodiment. As shown in FIG. 3 and so on, the heating apparatus 1 includes a chamber 3, and a heating room 5 is formed inside the chamber 3. A plurality of electrode group structures 50 is arranged in the heating room 5, and in the heating apparatus 1, a heat treatment or the like is performed on the plurality of electrode group structures 50 arranged in the heating room 5.

Note that, in one example, such as in FIG. 3, electrode group structures 50 in which the current collecting tabs 56A and 56B protrude to mutually opposite sides are shown as targets for the heat treatment, but a heat treatment is also performed in the heating apparatus 1 in the same manner as the heat treatment indicated hereinbelow for electrode group structures in which a pair of current collecting tabs protrude to the same side with respect to each other. In addition, regardless of whether the electrode group structures serving as targets for the heat treatment have a winding structure or a stacked structure, the heat treatment (preheat treatment) is performed in the heating apparatus 1 in the same manner as the heat treatment described hereinbelow.

A supply port 6 for supplying gas to the heating room 5 and a discharge port 7 for discharging gas from the heating room 5 are formed in the chamber 3. In one example, such as in FIG. 3, a fan (supply fan) 11 is disposed in the supply port 6, and a fan (discharge fan) 12 is disposed in the discharge port 7. In addition, in the heating apparatus 1, a valve (supply valve) 13 is disposed in a gas supply path to the heating room 5, and a valve (discharge valve) 15 is disposed in a gas discharge path from the heating room 5.

In the heating apparatus 1, by operating the fan 11 with the valve 13 opened, gas flows into the heating room 5 from the supply port 6, and gas is supplied to the heating room 5. At such time, when the operating state of the fan 11 changes, the amount of gas flowing in from the supply port 6 changes, and the amount of gas supplied to the heating room 5 changes. Furthermore, in the heating apparatus 1, by operating the fan 12 with the valve 15 opened, gas flows out of the heating room 5 through the discharge port 7, and gas is discharged from the heating room 5. At such time, when the operating state of the fan 12 changes, the amount of gas flowing out through the discharge port 7 changes, and the amount of gas discharged from the heating room 5 changes. Note that, in one example, gas may be circulated in the heating apparatus 1, and the gas discharged from the heating room 5 through the discharge port 7 may be supplied to the heating room 5 again through the supply port 6.

In the heating room 5, the pressure is adjusted by adjusting the amount of gas supplied through the supply port 6 and/or the amount of gas discharged through the discharge port 7. For example, in a state where the amount of gas supplied to the heating room 5 is larger than the amount of gas discharged from the heating room 5, the pressure of the heating room 5 increases. However, in a state where the amount of gas supplied to the heating room 5 is smaller than the amount of gas discharged from the heating room 5, the pressure of the heating room 5 decreases. Therefore, the fans 11 and 12 and the valves 13 and 15 constitute pressure adjustment units that adjust the pressure in the heating room 5. The heating apparatus 1 is also provided with a pressure sensor 16 that detects the pressure in the heating room 5.

In the heating apparatus 1 of the example of FIG. 3 and so on, a temperature adjustment unit 17 is provided in a gas supply path to the heating room 5. The temperature adjustment unit 17 includes a heater, and is capable of heating the gas supplied to the heating room 5 by means of the heater. In the heating apparatus 1, the temperature of the gas supplied to the heating room 5 changes, by changing the operating state of the temperature adjustment unit 17 including the heater. The temperature adjustment unit 17 adjusts the temperature of the heating room 5 by adjusting the temperature of the gas supplied to the heating room 5 while the gas is being supplied to the heating room 5.

In a certain situation, the temperature adjustment unit 17 maintains the temperature of the heating room 5 by supplying gas to the heating room 5 at the same or substantially the same temperature as the real-time temperature of the heating room 5. In another situation, the temperature adjustment unit 17 heats the gas supplied to the heating room 5, and so forth, to supply the gas, to the heating room 5, at a temperature higher than the real-time temperature of the heating room 5. Thus, the temperature of the heating room 5 is increased. The heating apparatus 1 is also provided with a temperature sensor 18 that detects the temperature of the heating room 5.

A heat conduction plate 20 is also disposed in the heating room 5, and in one example, such as in FIG. 3, a pair of heat conduction plates 20 are arranged in the heating room 5. The heat conduction plates 20 have high thermal conductivity, and the thermal conductivity of the heat conduction plates 20 is greater than or equal to the thermal conductivity of the current collectors 53A and 53B of the electrode group structures 50. In one example, the thermal conductivity of the heat conduction plates 20 is 16.0 W/(m · K) or more. The heat conduction plates 20 are formed of aluminum or an aluminum alloy, for example.

Here, in each of the plurality of electrode group structures 50, any one of the current collector 53A of the positive electrode 51A and the current collector 53B of the negative electrode 51B is defined as current collector 53α, and the other one of the current collectors 53A and 53B different from the current collector 53α is defined as current collector 53β. The current collecting tab 56α of the current collector 53α and the current collecting tab 56β of the current collector 53β are defined. Further, one of the pair of heat conduction plates 20 is defined as heat conduction plate 20α, and the other of the pair of heat conduction plates 20 different from the heat conduction plate 20α is defined as heat conduction plate 20β.

In a state where the plurality of electrode group structures 50 arranged in the heating room 5 is subjected to a heat treatment, in each of the plurality of electrode group structures 50, the current collecting tab 53α of the current collector 56α is connected to the heat conduction plate 20α, and the current collecting tab 53β of the current collector 56β is connected to the heat conduction plate 20β. Therefore, in a state where the heat treatment is being performed, the heat conduction plate 20α relays between the current collectors 53α of the plurality of electrode group structures 50, and the heat conduction plate 20β relays between the current collectors 53β of the plurality of electrode group structures 50. That is, the heat conduction plate 20α can be disposed in contact with the current collectors 53α of the plurality of electrode group structures 50, and the heat conduction plate 20β can be disposed in contact with the current collectors 53β of the plurality of electrode group structures 50.

The heat conduction plate 20α relays between the current collectors 53α of the plurality of electrode group structures 50, that is, the heat conduction plate 20α comes into contact with the current collectors 53α of the plurality of electrode group structures 50, and thus the heat conduction plate 20α enables heat to be conducted between each of the current collectors 53α of the electrode group structures 50. That is, in the above-described state, the heat conduction plate 20α enables heat to be conducted to the current collectors 53α of the plurality of electrode group structures 50. Therefore, in a state where the heat treatment is being performed, the current collectors 53α of each of the plurality of electrode group structures 50 enable heat to be conducted to the current collectors 53α of other electrode group structures 50 via the heat conduction plate 20α. Similarly, the heat conduction plate 20β relays between the current collectors 53β of the plurality of electrode group structures 50, that is, the heat conduction plate 20β comes into contact with the current collectors 53β of the plurality of electrode group structures 50, and thus the heat conduction plate 20β enables heat to be conducted between each of the current collectors 53β of the electrode group structures 50. That is, in the above-described state, the heat conduction plate 20β enables heat to be conducted to the current collectors 53β of the plurality of electrode group structures 50. Therefore, in a state where the heat treatment is being performed, the current collectors 53β of each of the plurality of electrode group structures 50 enable heat to be conducted to the current collectors 53β of other electrode group structures 50 via the heat conduction plate 20β.

The heating apparatus 1 further includes a plate temperature adjustment unit 21 and a temperature sensor 22. In one example, such as in FIG. 3, one plate temperature adjustment unit 21 and one temperature sensor 22 are provided for each of the heat conduction plates 20. Each of the plate temperature adjustment units 21 includes a heater, and is capable of heating the corresponding one of the heat conduction plates 20 by means of the heater. In each of the heat conduction plates 20, the temperature changes as an operating state of the corresponding one of the plate temperature adjustment unit 21 changes. For example, each of the plate temperature adjustment units 21 heats the corresponding one of the heat conduction plates 20 by means of the heater, thereby raising the temperature of the corresponding one of the heat conduction plates 20. Therefore, each of the plate temperature adjustment units 21 adjusts the temperature of the corresponding one of the heat conduction plates 20.

Note that, in one example, such as in FIG. 3, the plate temperature adjustment units 21 are arranged in the heating room 5, and directly heat the corresponding one of the heat conduction plates 20. However, it is not limited to or by this arrangement. In one example, the plate temperature adjustment units 21 are provided outside the heating room 5. Further, each of the plate temperature adjustment units 21 conducts the heat generated through heating to the corresponding one of the heat conduction plates 20 via a member different from the heat conduction plate 20. In this case also, each of the plate temperature adjustment units 21 adjusts the temperature of the corresponding one of the heat conduction plates 20. Furthermore, in one example, such as in FIG. 3, the temperature sensor 22 detects the temperature of the corresponding one of the heat conduction plates 20.

Furthermore, in the chamber 3 and the heating room 5, a vertical direction (the direction indicated by arrow V1 and arrow V2), a lateral direction (the direction indicated by arrow Y1 and arrow Y2) intersecting (orthogonal or substantially orthogonal to) the vertical direction, and a depth direction (the direction orthogonal or substantially orthogonal to the page surface in FIG. 3) intersecting both the vertical direction and the lateral direction are defined. The vertical direction is defined as a direction orthogonal to the horizontal plane. In addition, each of the lateral direction and the depth direction is parallel or substantially parallel to the horizontal plane.

In one example, such as in FIG. 3, the heat treatment of the electrode group structures 50 is performed in the heating room 5 in a state where the plurality of electrode group structures 50 is arranged along the vertical direction, that is, in a state where the plurality of electrode group structures 50 are stacked along the vertical direction. At such time, each of the electrode group structures 50 is arranged in a state where the thickness direction coincides or substantially coincides with the vertical direction. Further, each of the electrode group structures 50 is disposed in a state where the length direction and the width direction are parallel or substantially parallel to the horizontal plane. In one example, such as in FIG. 3, each of the electrode group structures 50 is disposed in a state where the length direction coincides or substantially coincides with the lateral direction of the heating room 5 and the width direction coincides or substantially coincides with the depth direction of the heating room 5. Furthermore, in one example, such as in FIG. 3, the arrangement direction (stacking direction) of the plurality of electrode group structures 50 coincides or substantially coincides with the vertical direction.

In one example, such as in FIG. 3, in a state where the heat treatment of the electrode group structures 50 is being performed, the heat conduction plate 20α is in contact with the current collecting tab 56α of the current collector 53α of each of the plurality of electrode group structures 50. Further, in a state where the heat treatment is being performed, the heat conduction plate 20β is in contact with the current collecting tab 56β of the current collector 53β of each of the plurality of electrode group structures 50. Note that, in one example, such as in FIG. 3, the heat conduction plate 20α is in contact with the current collecting tab 56α of the electrode group structures 50 from one side in the lateral direction of the heating room 5, and the heat conduction plate 20β is in contact with the current collecting tab 56β of the electrode group structures 50 from the side opposite to the heat conduction plate 20α in the lateral direction of the heating room 5.

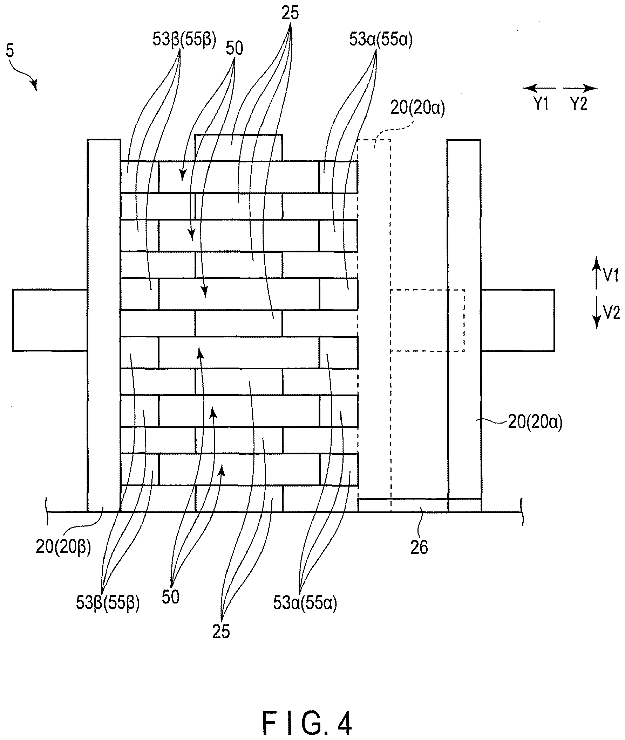

In the heating room 5, the positions of the plurality of electrode group structures 50 are adjusted before the heat treatment is performed. FIG. 4 shows an example of a configuration for adjusting the positions of the plurality of electrode group structures 50 in the heating room 5. In the example of FIG. 4, a plurality of guide plates 25 is provided in the heating room 5, and the guide plates 25 are arranged between the heat conduction plates 20α and 20β in the lateral direction of the heating room 5. The plurality of guide plates 25 is arranged along the vertical direction. Further, a gap is formed between the guide plates 25 adjacent to each other in the vertical direction. In addition, in the example of FIG. 4 and so on, the heat conduction plate 20α is movable along the lateral direction of the heating room 5 within a range where a guide rail 26 is formed. The heat conduction plate 20α is movable between a position indicated by a broken line in FIG. 4 and a position indicated by a solid line in FIG. 4, for example.

Upon adjusting the positions of the electrode group structures 50, a corresponding one of the plurality of electrode group structures 50 is inserted into each of the gaps formed between the guide plates 25. At such time, the heat conduction plate 20α is disposed in a position farther from the heat conduction plate 20β than the position indicated by the broken line in FIG. 4, being located in the position indicated by the solid line in FIG. 4, or the like. Further, each of the electrode group structures 50 is inserted into the gap in a state where the thickness direction coincides or substantially coincides with the vertical direction. In each of the electrode group structures 50 inserted into the corresponding one of the gaps, the current collecting tab 56α protrudes toward the heat conduction plate 20α, and the current collecting tab 56β protrudes toward the heat conduction plate 20β.

Further, the heat conduction plate 20α is moved to a position indicated by the broken line in FIG. 4 in a state where each of the plurality of electrode group structures 50 is inserted into the corresponding one of the gaps. As a result, in each of the electrode group structures 50, the current collecting tab 56α of the current collector 53α comes into contact with the heat conduction plate 20α, and the current collecting tab 56β of the current collector 53β comes into contact with the heat conduction plate 20β. As described above, in the example of FIG. 4 and so on, a guide portion, which guides each of the electrode group structures 50 in the heating room 5 in a state where the plurality of electrode group structures 50 is arranged along the vertical direction, is configured by the guide plates 25. Further, the guide plate 25, the heat conduction plate 20α, and the like constitute a position adjustment unit that adjusts the positions of the plurality of electrode group structures 50 in the heating room 5 in a state where the respective current collectors 53α and 53β of the electrode group structures 50 are in contact with the corresponding heat conduction plate (the corresponding one of 20α and 20β).

Note that the configuration of the guide portion is not limited to the example of FIG. 4. It is sufficient that a guide portion that guides each of the electrode group structures 50 in the heating room 5 in a state where the plurality of electrode group structures 50 is arranged along the vertical direction is provided in the heating room 5. Similarly, the configuration of the position adjustment unit is not limited to the example of FIG. 4. It is sufficient that the position adjustment unit configured to adjust the positions of the plurality of electrode group structures 50 in the heating room 5 in a state where the respective current collectors (for example, 53α, 53β) of the electrode group structures 50 are in contact with the corresponding heat conduction plate (for example, the corresponding one of 20α and 20β) is provided in the heating room 5.

Further, as illustrated in FIG. 3 and so on, the heating apparatus 1 includes a controller 24 that controls the entire heating apparatus 1. The controller 24 is, for example, a computer or the like. The controller 24 includes a processor or an integrated circuit (control circuit) including a central processing unit (CPU), an application specific integrated circuit (ASIC), a field programmable gate array (FPGA), or the like, and a storage medium (non-transitory storage medium) such as a memory. The controller 24 may include only one integrated circuit or the like, or may include a plurality of integrated circuits or the like. The controller 24 performs processing by executing a program or the like stored on a storage medium or the like.

The controller 24 acquires a detection result, using the pressure sensor 16, for the pressure in the heating room 5. Further, in a state where the heat treatment of the electrode group structures 50 is being performed, the controller 24 controls operation of the pressure adjustment units that include the fans 11 and 12 and the valves 13 and 15, based on the detection result by the pressure sensor 16. Accordingly, the pressure in the heating room 5 is adjusted based on the real-time pressure or the like in the heating room 5 detected by the pressure sensor 16, and thus control relating to the pressure in the heating room 5 is performed.

The controller 24 also acquires a detection result by the temperature sensor 18 for the temperature of the heating room 5. Further, in a state where the heat treatment of the electrode group structures 50 is being performed, the controller 24 controls operation of the temperature adjustment unit 17 that includes a heater or the like, based on the detection result by the temperature sensor 18. Accordingly, the temperature of the heating room 5 is adjusted based on the real-time temperature or the like in the heating room 5 as detected by the temperature sensor 18, and thus control relating to the temperature of the heating room 5 is performed.

In addition, the controller 24 acquires a detection result of each of the temperature sensors 22 regarding the temperature of the corresponding heat conduction plate 20. Further, in a state where the heat treatment of the electrode group structures 50 is being performed, the controller 24 controls operation of each of the plate temperature adjustment units 21, and controls the operation of the heater of each of the plate temperature adjustment units 21, based on the detection result by the corresponding temperature sensor 22. As a result, the temperature of each of the heat conduction plates 20 is adjusted based on the real-time temperature or the like of each of the heat conduction plates 20 detected by the corresponding temperature sensor 22, and thus control relating to the temperature of the heat conduction plates 20 is performed.

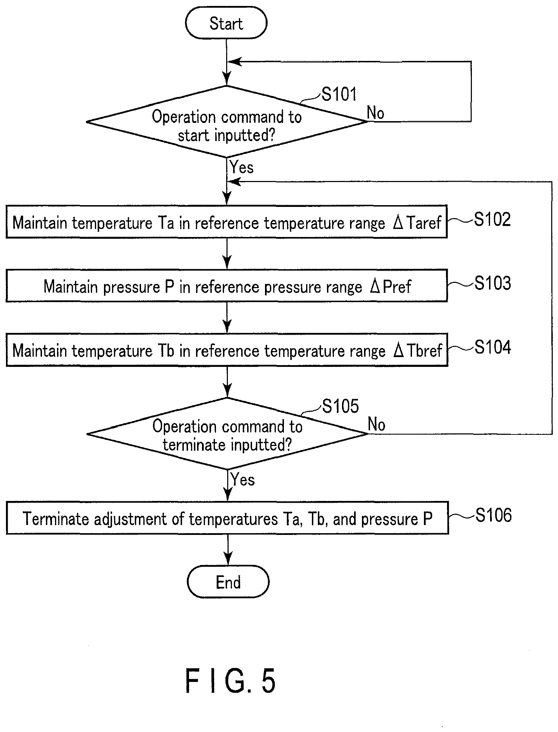

FIG. 5 illustrates an example of processing performed by the controller 24. The processing in FIG. 5 is started in a state where the positions of the plurality of electrode group structures 50 are adjusted in the heating room 5 as described above. In addition, it is assumed that the heat treatment of the electrode group structures 50 is not being performed at the start of the treatment of FIG. 5. Note that, in the following description, a temperature Ta of the heating room 5, a pressure P of the heating room 5, and a temperature Tb of the heat conduction plates 20 are defined as parameters. In the heat treatment of the electrode group structures 50, the temperatures Ta and Tb and the pressure P are adjusted. In the following description, a state before each adjustment of the temperatures Ta and Tb and the pressure P is started, that is, a state before the heat treatment of the electrode group structures 50 is started, is defined as an initial state.

Upon starting the processing of FIG. 5, the controller 24 determines whether or not an operation command for starting the heat treatment has been inputted (S101). The operation command is inputted by an operator or the like on a user interface provided in the heating apparatus 1 or provided separately from the heating apparatus 1. In a case where the operation command for starting the heat treatment has not been inputted (S101 - No), the processing stands by in S101.

If an operation command for starting the heat treatment is inputted (S101 - Yes), the controller 24 controls operation of the temperature adjustment unit 17 to perform temperature control to maintain the temperature Ta of the heating room 5 within a reference temperature range ΔTaref (S102). Accordingly, the temperature Ta in the heating room 5 is adjusted to the reference temperature range ΔTaref. Note that, by being adjusted to the reference temperature range ΔTaref, the temperature Ta in the heating room 5 is higher than a temperature Tae in an initial state before the adjustment. In one example, by being adjusted to the reference temperature range ΔTaref, the temperature Ta becomes any temperature from 60°C to 130°C.

In addition, the controller 24 performs pressure control to maintain the pressure P of the heating room in a reference pressure range ΔPref by controlling operation of the pressure adjustment units that include the fans 11 and 12 and the valves 13 and 15 (S103). Accordingly, pressure P in the heating room 5 is adjusted to the reference pressure range ΔPref. Note that, by being adjusted to the reference pressure range ΔPref, the pressure P in the heating room 5 is higher than a pressure Pe in an initial state before the adjustment is performed. In one example, the pressure P becomes 0.1 MPa or more by being adjusted to the reference pressure range ΔPref.

In addition, the controller 24 performs temperature control to maintain the temperature Tb of each of the heat conduction plates 20 in a reference temperature range ΔTbref by controlling operation of each of the plate temperature adjustment units 21 (S104). Accordingly, the temperature Tb of each of the heat conduction plates 20 is adjusted to the reference temperature range ΔTbref. Note that, by being adjusted to the reference temperature range ΔTbref, the temperature Tb of each of the heat conduction plates 20 is higher than a temperature The in an initial state before the adjustment is performed. In one example, by being adjusted to the reference temperature range ΔTbref, the temperature Tb becomes any temperature from 60°C to 130°C.

The controller 24 then determines whether or not an operation command to terminate the heat treatment has been inputted using a user interface or the like (S105). In a case where an operation command to terminate the heat treatment has not been inputted (S105 - No), the processing returns to S102. The controller 24 then sequentially performs the processing of S102 and subsequent processing. Therefore, the above-described adjustment of each of the temperatures Ta and Tb and the pressure P is continuously performed. When an operation command to terminate the heat treatment has been inputted (S105 - Yes), the controller 24 ends the above-described adjustment of each of the temperatures Ta and Tb and the pressure P (S106). Note that, in one example, the controller 24 may terminate the above-described adjustment for each of the temperatures Ta and Tb and the pressure P based on the elapse of a predetermined time from the start of the heat treatment.

Here, the order for starting the adjustment to maintain the temperature Ta in the reference temperature range ΔTaref, the adjustment to maintain the pressure P in the reference pressure range ΔPref, and the adjustment to maintain the temperature Tb in the reference temperature range ΔTbref is not particularly limited. Similarly, the order for terminating the adjustment to maintain the temperature Ta in the reference temperature range ΔTaref, the adjustment to maintain the pressure P in the reference pressure range ΔPref, and the adjustment to maintain the temperature Tb in the reference temperature range ΔTbref is not particularly limited. The temperature Tb of the heat conduction plates 20 may be adjusted at least partially in parallel with each adjustment of the temperature Ta and the pressure P of the heating room 5. Furthermore, a period in which the adjustments of the temperatures Ta and Tb and the pressure P are performed simultaneously may be provided.

As described above, in the present embodiment, by controlling the operation of the temperature adjustment unit 17, the temperature Ta of the heating room 5 is higher than in an initial state before the adjustment of the temperature Ta of the heating room 5 is started. As a result, each of the electrode group structures 50 arranged in the heating room 5 is heated by the heat being transferred from the heating room 5. Moreover, in a state where the temperature Ta in the heating room 5 is maintained at a temperature higher than in an initial state, the operation of the pressure adjustment units such as the fans 11 and 12 is controlled, and thus the pressure P in the heating room 5 is higher than in an initial state before the adjustment of the pressure P in the heating room 5 is started. As a result, the density of the high-temperature gas increases in the heating room 5, and the electrode group structures 50 arranged in the heating room 5 are appropriately heated by the high-temperature gas.

Moreover, in the present embodiment, in a state where the heat treatment of the electrode group structures 50 is being performed, the current collectors 53α of the plurality of electrode group structures 50 and the current collectors 53β of the plurality of electrode group structures 50 are respectively relayed by the corresponding one of the heat conduction plates 20α and 20β. Therefore, in a state where the heat treatment is being performed, each of the electrode group structures 50 enables heat to be conducted to the other electrode group structures 50 via the heat conduction plates 20. As a result, variations in temperature after the heat treatment (after heating) between the plurality of electrode group structures 50 is appropriately suppressed. In addition, because heat is conducted between the plurality of electrode group structures 50 in a state where the heat treatment is being performed, the heating time of the heat treatment can be shortened.

Furthermore, in the present embodiment, by controlling the operation of the plate temperature adjustment units 21, the temperature Tb of each of the heat conduction plates 20 is also adjusted, as described earlier, at least partially in parallel with the adjustment of the temperature Ta of the heating room 5, and so forth. Further, by adjusting the temperature Tb of the heat conduction plates 20, the temperature Tb of each of the heat conduction plates 20 is higher than in an initial state before the adjustment of the temperature Tb is started. As a result, each of the electrode group structures 50 arranged in the heating room 5 is heated by the heat conducted from the heat conduction plates 20 in addition to the heat transmitted from the heating room 5. Accordingly, in the heat treatment of the electrode group structures 50, the electrode group structures 50 are further appropriately heated, and the heating time is shortened further.

Note that, by appropriately heating the electrode group structures 50 in the heat treatment, the electrode group structures 50 are appropriately compressed in compression in which the pressing apparatus 2 or the like is used after the heat treatment. As a result, the electrode group is stably machined and molded by the heat treatment by the heating apparatus 1 and the compression by the pressing apparatus 2 or the like. By stably molding the electrode group, the work efficiency and so forth in work to assemble a product that uses an electrode group such as a battery is appropriately ensured.

In addition, in the present embodiment, the positions of each of the electrode group structures 50 in the heating room 5 are adjusted in a state where each of the current collectors 53 of the electrode group structures 50 is in contact with the corresponding one of the heat conduction plates 20. As a result, the heat treatment of the electrode group structures 50 is performed in a state where each of the current collectors 53 of the electrode group structures 50 is in contact with the corresponding one of the heat conduction plates 20, and thus, in the heat treatment, each of the heat conduction plates 20 appropriately conducts heat between the plurality of electrode group structures 50.

Moreover, in the present embodiment, each of the electrode group structures 50 is guided in the heating room 5 in a state where the plurality of electrode group structures 50 is arranged along the vertical direction. The heat treatment is then performed in a state where the plurality of electrode group structures 50 is arranged (stacked) along the vertical direction. By performing the heat treatment in this manner, after the completion of the heat treatment, the electrode group structures 50 are conveyed to the pressing apparatus 2 or the like while the plurality of electrode group structures 50 are still arranged along the vertical direction, and the plurality of electrode group structures 50 can be compressed together by pressing or the like. Because the plurality of electrode group structures 50 is compressed together (simultaneously), the work efficiency in the work to manufacture the electrodes from the electrode group structures 50 by means of the heat treatment and the compression improves.

Note that, in one example, only the supply port 6 is provided in the heating room 5, and the discharge port 7 is not provided. In this case, by controlling the operation of fan 11 or the like in a state where the heat treatment is being performed, the amount of gas supplied from the supply port 6 to the heating room 5 is adjusted, and the pressure of the heating room 5 is adjusted. In addition, in the present example, the supply port 6 is also used as a discharge port. In this case, gas is discharged from the supply port 6 after completion of the heat treatment.

According to at least one of the embodiments and the examples, in a state where the heat conduction plate is in contact with the current collectors of the plurality of electrode group structures in the heating room, the heat conduction plate enables heat to be conducted to the current collectors of the plurality of electrode group structures. Further, the controller controls operation of the temperature adjustment unit and the pressure adjustment unit in a state where the heat conduction plate is in contact with the current collectors of the plurality of electrode group structures. Accordingly, it is possible to provide a heating apparatus and a manufacturing method of an electrode group capable of stably heating electrode group structures.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A heating apparatus (1) for heating an electrode group structure (50) including a current collector (53A,53B), the heating apparatus (1) comprising:
a chamber (3) inside which a heating room (5), in which a plurality of the electrode group structures (50) are disposed, is formed;
a heat conduction plate (20) that is capable of coming into contact with the current collectors (53A,53B) of the electrode group structures (50) in the heating room (5), and that enables heat to be conducted to the current collectors (53A,53B) of the electrode group structures (50) in a state of being in contact with the current collectors (53A,53B) of the electrode group structures (50);
a temperature adjustment unit (17) that adjusts a temperature of the heating room (5);
a pressure adjustment unit (11,12,13,15) that adjusts a pressure of the heating room (5); and
a controller (24) that controls operation of the temperature adjustment unit (17) and the pressure adjustment unit (11,12,13,15) in a state where the heat conduction plate (20) is in contact with the current collectors (53A,53B) of the electrode group structures (50) .

2. The heating apparatus (1) according to claim 1, further comprising:
a plate temperature adjustment unit (21) that adjusts a temperature of the heat conduction plate (20),
wherein the controller (24) controls operation of the plate temperature adjustment unit (21) in a state where the heat conduction plate (20) is in contact with the current collectors (53A,53B) of the electrode group structures (50) .

3. The heating apparatus (1) according to claim 1 or 2, further comprising: a position adjustment unit (20α,25) that adjusts positions of the electrode group structures (50) in the heating room (5) so that the current collector (53A,53B) of each of the electrode group structures (50) is in contact with the heat conduction plate (20).

4. The heating apparatus (1) according to any one of claims 1 to 3, further comprising: a guide portion (25) that guides each of the electrode group structures (50) in the heating room (5) so that the electrode group structures (50) are arranged along a vertical direction (V1,V2).

5. The heating apparatus (1) according to any one of claims 1 to 4, wherein a thermal conductivity of the heat conduction plate (20) is greater than or equal to a thermal conductivity of the current collector (53A,53B) of each of the electrode group structures (50).

6. A manufacturing method of an electrode group, comprising:
arranging a plurality of electrode group structures (50), which each include a current collector (53A,53B), in a heating room (5) inside a chamber (3);
bringing a heat conduction plate (20) into contact with the current collectors (53A,53B) of the electrode group structures (50) in the heating room (5) to enable heat to be conducted to the current collectors (53A,53B) of the electrode group structures (50);
heating the electrode group structures (50) by adjusting each of a temperature and a pressure of the heating room (5) in a state where the heat conduction plate (20) is in contact with the current collectors (53A,53B) of the electrode group structures (50); and
compressing each of the heated electrode group structures (50).

7. The manufacturing method according to claim 6, further comprising: adjusting a temperature of the heat conduction plate (20) at least partially in parallel with the adjustment of the temperature and the adjustment of the pressure of the heating room (5).
